(19) **Europäisches Patentamt / European Patent Office / Office européen des brevets**

(11) **EP 4 217 694 B1**

(12) **FASCICULE DE BREVET EUROPEEN**

(45) Date de publication et mention de la délivrance du brevet:
**05.11.2025 Bulletin 2025/45**

(21) Numéro de dépôt: **21786347.1**

(22) Date de dépôt: **24.09.2021**

(51) Classification Internationale des Brevets (IPC):
**G01J 5/04** *(2006.01)* **G01J 5/08** *(2022.01)*
**G01J 5/52** *(2022.01)*

(52) Classification Coopérative des Brevets (CPC):
**G01J 5/047; G01J 5/0806; G01J 5/0859;
G01J 5/53; G01J 5/80;** G01J 2005/0077

(86) Numéro de dépôt international:
**PCT/EP2021/076364**

(87) Numéro de publication internationale:
**WO 2022/063987 (31.03.2022 Gazette 2022/13)**

(54) **SYSTEME THERMOGRAPHIQUE INFRAROUGE ET PROCEDE ASSOCIE**

THERMOGRAPHISCHES INFRAROTSYSTEM UND ZUGEHÖRIGES VERFAHREN

INFRARED THERMOGRAPHIC SYSTEM AND ASSOCIATED METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.09.2020 FR 2009797**

(43) Date de publication de la demande:
**02.08.2023 Bulletin 2023/31**

(73) Titulaire: **HGH Systemes Infrarouges
91430 Igny (FR)**

(72) Inventeurs:
• **THOMAS, Anthony**
  **91300 Massy (FR)**
• **DAVY, Axel**
  **91120 Palaiseau (FR)**
• **AUBRY, Gilles**
  **91940 Gometz-le-Châtel (FR)**
• **ALVES, Frédéric**
  **75013 Paris (FR)**
• **LEBOUCHER, Vincent**
  **75013 Paris (FR)**

(74) Mandataire: **IPAZ
Bâtiment Platon
Parc Les Algorithmes
91190 Saint-Aubin (FR)**

(56) Documents cités:
EP-B1- 2 577 242      WO-A1-2016/033297
WO-A1-2016/146704    WO-A2-2004/027459
US-A1- 2005 285 953   US-A1- 2007 153 871
US-A1- 2013 147 966   US-A1- 2013 188 010

**Description**

**Domaine technique**

La présente invention concerne un système thermographique infrarouge configuré pour la détection de température (i.e. de préférence une mesure de température) d'un objet. Elle concerne aussi un procédé mis en œuvre par ledit système.

Le domaine de l'invention est le domaine de la thermographie, et plus particulièrement le domaine de la thermographie infrarouge en temps réel.

Un tel dispositif permet d'améliorer la précision d'une mesure de la température apparente d'un objet dans un environnement.

**Etat de la technique antérieure**

Actuellement, il existe des caméras infrarouges mettant en œuvre de la thermographie infrarouge, disposant d'un champ fixe plus ou moins étendu en fonction du choix de l'objectif et fonctionnant à une cadence de quelques Hz à quelques dizaines de Hz.

Ces caméras infrarouges comprennent des moyens de correction de l'image car les détecteurs infrarouges ne sont généralement ni uniformes, ni stables. En effet, les caméras infrarouges sont généralement stables du point de vue du gain mais pas de l'offset.

De plus, les caméras n'étant pas stables, celles-ci sont souvent dotées d'un obturateur interne qui permet de présenter à intervalle au détecteur une scène uniforme. L'obturateur interne ne permet donc pas de présenter au détecteur la scène avec les mêmes caractéristiques que celles vues par l'objectif.

Il s'ensuit que les images corrigées avec un obturateur interne présentent au moins des non uniformités spatiales aux faibles fréquences spatiales dues à un défaut de compensation du flux parasite de l'objectif.

Le but de la présente invention est de résoudre au moins un des inconvénients susmentionnés en améliorant la stabilité et/ou l'uniformité et/ou le champ de vue.

Les documents US 2013/188010 A1, WO 2016/146704 A1, US 2013/147966 A1 et WO 2004/027459 A2 divulguent des exemples de l'état de la technique.

**Exposé de l'invention**

Cet objectif est atteint avec un système thermographique infrarouge configuré pour la détection ou la mesure de température d'un objet selon la revendication 1.

Le module de traitement peut être agencé et/ou programmé pour corriger la non-uniformité spatiale en retranchant pixel à pixel, sur chacune des images acquises, la non-uniformité spatiale de l'image de référence imageant la source de correction de non-uniformité et de préférence en y ajoutant la valeur moyenne de cette non-uniformité.

Le système thermographique infrarouge selon l'invention peut comprendre une source de référence infrarouge, dite source de calibration, thermostatée ou équipée de moyens de mesure de sa température, au moins une des images distinctes de chaque panorama imageant cette source de calibration, le module de traitement étant agencé et/ou programmé pour calibrer en température les images acquises d'un même panorama en fonction de cette source de calibration.

La source de calibration peut être thermostatée à une température supérieure à 33 degrés et/ou inférieure à 40 degrés.

Le module de traitement peut être agencé et/ou programmé pour :

- déterminer une distance entre l'objet et le capteur d'images en fonction d'une dimension de l'objet sur une des images acquises et/ou déterminer une position de l'objet dans un champ d'une image acquise par le capteur d'images,
- corriger la température de l'objet en fonction de la distance déterminée entre l'objet et le capteur d'image et/ou en fonction de la position de l'objet dans un champ d'une image acquise par le capteur d'images.

Le système thermographique selon l'invention peut comprendre au moins un capteur d'images de lumière visible (couleur ou noir et blanc), agencé pour capter l'objet de manière simultanée au capteur d'images infrarouges.

Le module de traitement peut être agencé et/ou programmé pour déterminer des données de température de surface (c'est-à-dire de préférence, mesurer la température de surface) dudit objet, le système comprenant en outre des moyens de mesure de température ambiante autour de l'objet, le module de traitement étant agencé et/ou programmé pour déterminer une température interne de l'objet en fonction des données de température de surface (c'est-à-dire de préférence, en fonction de la température de surface) dudit objet et de la température ambiante mesurée.

Le module de traitement peut être agencé et/ou programmé pour déterminer différentes valeurs de température de l'objet dans le temps et de déterminer la valeur maximale parmi toutes les valeurs précédemment déterminées.

Le système thermographique infrarouge selon l'invention peut comprendre des moyens pour générer une alerte visuelle ou sonore si la température de l'objet:

- est supérieure à une température seuil mémorisée par le module de traitement, ou
- à un écart de température supérieur à un écart seuil par rapport à des températures d'autres objets imagés par le système thermographique.

Les moyens pour générer une alerte visuelle ou sonore peuvent être agencés et/ou programmés pour filtrer une fausse alerte en comparant différentes températures mesurées de l'objet.

Le module de traitement peut être agencé et/ou programmé pour éliminer sur des images acquises par le capteur d'images :

- des points chauds sur l'objet, et/ou
- un fond entourant l'objet

avant de déterminer les données de température (c'est-à-dire, typiquement, mesurer la température) dudit objet.

Le système thermographique infrarouge comprend un système optique, le système optique reliant optiquement la source de référence infrarouge en champ proche au capteur d'images .

La source de référence infrarouge en champ proche est suffisamment proche du capteur d'images pour être située en dehors de la profondeur de champ du système optique reliant optiquement la source au capteur, de sorte que le capteur soit agencé pour n'intercepter que des rayons lumineux en provenance de la source dans le plan focal du système optique reliant optiquement la source au capteur.

Le système optique peut se situer entre la source de référence en champ proche et le capteur d'images.

Suivant encore un autre aspect de l'invention, il est proposé un procédé thermographique infrarouge pour la détection ou la mesure de température d'un objet selon la revendication 13.

Le module de traitement peut corriger la non-uniformité spatiale en retranchant pixel à pixel, sur chacune des images acquises, la non-uniformité spatiale de l'image de référence imageant la source de correction de non-uniformité et de préférence en y ajoutant la valeur moyenne de cette non-uniformité.

Le procédé thermographique infrarouge selon l'invention peut comprendre :

- un thermostatage et/ou une mesure de la température d'une source de référence infrarouge, dite source de calibration, et

au moins une des images distinctes de chaque panorama imageant cette source de calibration, le module de traitement calibrant en température les images acquises d'un même panorama en fonction de cette source de calibration.

La source de calibration peut être thermostatée à une température supérieure à 33 degrés et/ou inférieure à 40 degrés.

Le module de traitement peut :

- déterminer une distance entre l'objet et le capteur d'images en fonction d'une dimension de l'objet sur une des images acquises et/ou détermine une position de l'objet dans un champ d'une image acquise par le capteur d'images,
- corriger la température de l'objet en fonction de la distance déterminée entre l'objet et le capteur d'image et/ou en fonction de la position de l'objet dans un champ d'une image acquise par le capteur d'images.

Le procédé thermographique infrarouge selon l'invention peut comprendre une captation, par au moins un capteur d'images de lumière visible (couleur ou noir et blanc), de l'objet de manière simultanée au capteur d'images infrarouge.

Le module de traitement peut déterminer des données de température de surface (c'est-à-dire de préférence, mesurer la température de surface) dudit objet, le procédé comprenant en outre une mesure de température ambiante autour de l'objet, le module de traitement déterminant une température interne de l'objet en fonction des données de température de surface (soit, de préférence, en fonction de la température de surface) dudit objet et de la température ambiante mesurée.

Le module de traitement peut déterminer différentes valeurs de température de l'objet dans le temps et détermine la valeur maximale parmi toutes les valeurs précédemment déterminées.

Le procédé thermographique infrarouge selon l'invention peut comprendre une génération d'une alerte visuelle ou sonore si la température de l'objet :

- est supérieure à une température seuil mémorisée par le module de traitement, ou
- à un écart de température supérieur à un écart seuil par rapport à des températures d'autres objets imagés par le système thermographique.

La génération de l'alerte visuelle ou sonore peut filtrer une fausse alerte en comparant différentes températures mesurées de l'objet.

Le module de traitement peut éliminer sur des images acquises par le capteur d'images :

- des points chauds sur l'objet, et/ou
- un fond entourant l'objet

avant de déterminer les données de température (c'est-à-dire, typiquement, mesurer la température) dudit objet.

## Description des figures et modes de réalisation

D'autres avantages et particularités de l'invention apparaîtront à la lecture de la description détaillée de mises en œuvre et de modes de réalisation nullement limitatifs, et des dessins annexés suivants :

[Fig. 1] la figure 1 est une vue schématique de coupe de profil d'un système thermographique infrarouge selon l'invention, qui est le mode de réalisation préféré de l'invention.
[Fig. 2] la figure 2 est une vue schématique de dessus du système selon l'invention de la figure 1.

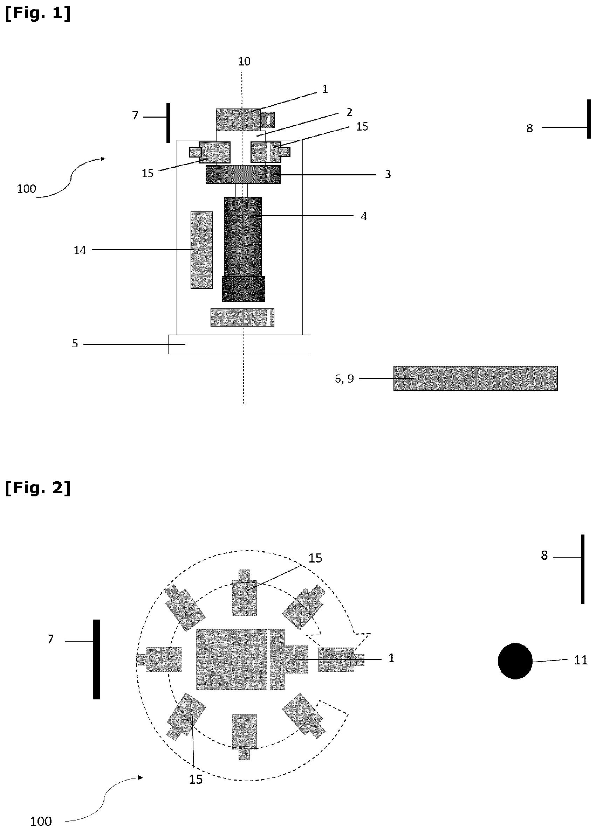

On va tout d'abord décrire, en référence aux figures 1 et 2, un premier mode de réalisation de système thermographique infrarouge (100) selon l'invention configuré pour la détection de température d'un objet (11).

Le système (100) comprend un capteur d'images (1) infrarouge thermique agencé pour collecter des rayonnements infrarouges et construire au moins une image à partir de ces rayonnements.

Le système (100) est agencé et/ou programmé pour la détection, le pistage des objets (11) et l'association avec une mesure de température apparente corrigée d'un objet (11).

Les applications sont diverses, par exemple :

- la détection de personnes présentant de la fièvre dans un environnement étendu,
- la détection précoce d'incendies,
- la surveillance de procédés industriels.

La fonction de thermographie est par ailleurs avantageusement associée à la fonction de détection et/ou suivi d'intrusions.

Le capteur d'image (1) est typiquement de type infrarouge thermique à microbolomètres par exemple. Le capteur d'images (1) perçoit la scène environnante et crée au moins une image à haute résolution d'une portion restreinte du panorama.

On entend par « infrarouge », des rayonnements relatifs à l'émission naturelle des objets (11) à température ambiante ou infrarouge à ondes longues (« Long Wave InfraRed » (LWIR)), la longueur d'onde de ces rayonnements infrarouge se situant entre 8000 nm et 14000 nm par exemple.

D'après la figure 1, le système (100) comprend également un support d'entrainement (2) agencé pour entrainer en rotation le capteur (1) autour d'un axe de rotation (10). Le capteur d'images (1) est fixé sur le support d'entrainement (2) de sorte que, lors de la rotation du support d'entrainement (2), le capteur (1) image différentes zones distinctes entourant le système thermographique. Le capteur d'images (1) est agencé pour acquérir plusieurs images distinctes de sorte que la combinaison de ces différentes images forme un panorama continu d'au moins 180 degrés (de préférence de 360°) autour de l'axe de rotation (10) du support d'entrainement (2).

Le capteur d'images (1) est agencé pour faire l'acquisition de l'image panoramique par portions, généralement par colonne ou par secteur à deux dimensions par exemple. Le champ de vue panoramique convient à des zones dans lesquelles les mouvements de personnes (11) sont multidirectionnels et imprévisibles comme dans un hall de gares, d'aérogares, d'hôpitaux, de zones commerciales. La construction d'une image panoramique à partir des plusieurs images distinctes est réalisée par un algorithme ou une technologie de type « image stitching » ou assemblage d'images.

Le système (100) est agencé pour étendre le champ de vue du capteur d'images (1) à un panorama complet ou quasi complet en y associant des moyens agencés pour une correction en temps réel de la mesure afin d'améliorer la précision de la mesure de la température apparente des objets (11).

Le support d'entrainement (2) est relié à un dispositif électromécanique d'entrainement (4) en rotation qui oriente l'axe du capteur d'images (1) au moins en gisement. Une orientation de l'axe (10) est aussi intéressante en fonction du champ de vue vertical souhaité.

Le dispositif électromécanique d'entrainement (4) en rotation est typiquement de type servomoteur brushless (« sans balai ») compact par exemple.

Le support d'entrainement (2) est agencé pour fixer le capteur d'images (1) sur l'axe du dispositif électromécanique d'entrainement (4). Le capteur d'images (1) a par exemple un champ vertical d'au moins quinze degrés, typiquement de vingt ou quarante degrés. Avantageusement, la combinaison des différentes images acquises par le capteur d'images (1) forme un panorama continu de 360°.

Le système 100 comprend également un module de traitement (6) agencé et/ou programmé pour déterminer des données de température (c'est à dire de préférence pour mesurer une température) dudit objet (11) à partir des images acquises par le capteur d'images (1).

La détermination de données de température ou la mesure de température correspond de préférence à une mesure de température absolue, la température absolue ne correspondant pas à un simple écart de température par rapport à une référence inconnue, mais correspondant à une température réelle ou estimée de l'objet typiquement exprimée en degrés Celsius, ou degrés Fahrenheit ou Kelvin.

Le module de traitement (6) est ainsi agencé et/ou programmé pour mesurer une température dudit objet (11) à partir des images acquises par le capteur d'images (1).

Le module (6) comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

D'après la figure 1, le système (100) comprend un dispositif de transmission des données (3) configuré pour transmettre :

- le signal vidéo du capteur d'images (1) entre la partie mobile (1) et la partie fixe (6),
- l'alimentation électrique du capteur d'images (1) et
- les signaux de communication bidirectionnelle entre le capteur d'images (1) et les moyens de contrôle et de communication (9).

Il s'agit d'un collecteur configuré pour la transmission du signal vidéo en provenance du capteur (1) de manière filaire ou non filaire jusqu'au module (6) et/ou jusqu'aux moyens (9).

Les moyens de contrôle et de communication (9) sont agencés pour contrôler l'ensemble des fonctions du capteur d'images (1) et agir sur ses paramètres.

Les moyens de contrôle et de communication (9) comprennent au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels. D'après la figure 1, le système (100) est fixé sur une base fixe (5).

Le système (100) comprend en outre un module électronique (14) agencé et/programmé pour :

- générer chaque image panoramique pour l'envoyer au module (6),
- gérer localement les commandes à l'attention du capteur (1) et du dispositif électromécanique d'entrainement (4), notamment le pilotage des éléments de la caméra (capteur 1 et son système optique) et la communication avec la caméra,
- recevoir des ordres en provenance de l'unité (6) à l'attention du capteur (1) et du dispositif électromécanique d'entrainement (4).

Le module (14) comprend au moins un ordinateur, une unité centrale ou de calcul, un circuit électronique analogique (de préférence dédié), un circuit électronique numérique (de préférence dédié), et/ou un microprocesseur (de préférence dédié), et/ou des moyens logiciels.

Le système (100) comprend une source de référence infrarouge en champ proche (7) dite source de correction de non-uniformité. Au moins une des images distinctes de chaque panorama image cette source de correction de non-uniformité. Le module de traitement (6) est agencé et/ou programmé pour corriger la non-uniformité spatiale des images acquises en fonction de la source de correction de non-uniformité. La source en champ proche (7) est typiquement de type corps noir. Cette source est constituée d'un matériau suffisamment dense avoir une conduction assurant une bonne uniformité thermique qui est le gage d'une bonne correction des non uniformités spatiales du capteur (1). Le matériau peut avantageusement être un alliage d'aluminium mais si la source est passive, un matériau plastique dense peut suffire. Le matériau est recouvert d'une couche présentant une émissivité proche de 1 qui peut avantageusement être déposé sous forme d'un film de peinture.

Le source 7 est en champ proche.

On entend par « source en champ proche », une source suffisamment proche du capteur d'images (1) :

- pour être située en dehors de la profondeur de champ du système optique reliant optiquement la source (7) au capteur (1), et
- de sorte que, pour au moins une position du support d'entrainement (2), l'image obtenue par le capteur (1) soit occupée en totalité par cette source (7) ce qui revient à dire que la source (7) couvre toute l'étendue géométrique de la caméra (formée par le capteur 1 et le système optique reliant optiquement la source (7) au capteur (1)), i.e. le capteur (1) n'intercepte que des rayons lumineux en provenance de la source (7) dans le plan focal du système optique reliant optiquement la source (7) au capteur (1).

La source en champ proche (7) est configurée pour présenter au capteur d'images (1) une scène infrarouge uniforme. Placée en champ proche, la source (7) masque au moins temporairement une partie du panorama. Elle est passive ou active.

On entend par « active », une source (7) thermostatée et par « passive » une source (7) non thermostatée.

Pour les besoins de corrections de non-uniformités, la source en champ proche (7) est intercalée à intervalle au capteur d'images (1) afin d'être vue au moins une fois par le capteur (1) par panorama. Si celle-ci est fixe, la source (7) est alors présentée dans chaque panorama et en masque une portion.

La source (7) est avantageusement escamotable pour que le capteur d'images (1) retrouve un champ de vue utile horizontal de 360° lors de sa rotation.

Le capteur d'images 1 est relié au système optique (non présenté sur la figure). Le système optique relie optiquement la source de référence infrarouge en champ proche (7) au capteur d'images (1). Avantageusement, le système optique se situe entre la source de référence en champ proche (7) et le capteur d'images (1).

Idéalement, le système optique forme l'ensemble des éléments optiques solides reliant optiquement la source de référence infrarouge en champ proche (7) au capteur d'images (1).

Le reste des éléments reliant optiquement la source de référence infrarouge en champ proche (7) au capteur d'images (1) ne comprend que du gaz, typiquement de l'air.

D'après les figures 1 et 2, le système (100) comprend également une source de référence infrarouge, dite source de calibration (8). La source de calibration (8) est thermostatée ou équipée de moyens de mesure de sa température. Au moins une des images distinctes de chaque panorama image cette source (8), au moins partiellement. Le module de traitement (6) est agencé et/ou programmé pour calibrer en température les images acquises du même panorama en fonction de cette source de calibration (8). La source de calibration (8) est typiquement de type corps noir et sa dimension est telle que son image sur le capteur (1) soit étendue au sens où elle représente un grand nombre de pixels par exemple au moins 10x10.

La source (8) est en champ distant.

On entend par « source en champ distant », une source suffisamment distante pour que la source soit dans la profondeur de champ du système (100). Le système (100) voit alors la source (8) de façon nette.

La source de calibration (8) est agencée pour présenter au capteur d'images (1) une température apparente d'intérêt et est avantageusement placée dans un endroit ne gênant pas le panorama. Cette source (8) est active ou passive, et distincte ou confondue avec la source (7), voir même optionnelle.

On entend par « active », une source (8) thermostatée et par « passive » une source (8) non thermostatée.

La source de calibration (8) est thermostatée à une température supérieure à 33 degrés et/ou inférieure à 40 degrés. Avantageusement, la source de calibration (8) est thermostatée à une température proche de la température de l'objet (11) d'intérêt. Dans le cas de la détection de fièvre, la source de calibration (8) est thermostatée à environ 37° par exemple.

Le système (100) (plus précisément le module 6) est agencé et/ou programmé pour corriger la non-uniformité spatiale de chaque image distincte composant un panorama en retranchant pixel à pixel, sur chacune des images distinctes acquises pour ce panorama, la non-uniformité spatiale de l'image de référence de ce panorama imageant la source de correction de non-uniformité 7 et en y ajoutant la valeur moyenne de cette non-uniformité.

Dans les portions d'images panoramiques acquises par le capteur (1), figurent une première zone de référence correspondant à la source de référence proche (7) et, optionnellement, l'image de la scène dans laquelle l'image de la source de calibration (8) se trouve.

La source en champ proche (7) est agencée pour un enregistrement par le capteur (1) et le module (6), des non uniformités spatiales pour en effectuer la correction. Ce relevé périodique de la source (7) par le capteur (1) est utilisé par le module (6) pour éliminer la non uniformité résiduelle dans toutes les portions de l'image panoramique, chaque portion présentant la même figure résiduelle de non uniformité. L'évolution temporelle de cette non uniformité est lente devant la fréquence de présentation de la source en champ proche (7). Pour limiter l'influence du bruit temporel, la non uniformité relevée est moyennée temporellement par le module (6) avant de procéder à la correction sur toutes les portions d'images par le module (6). La portion de l'image panoramique dans laquelle est imagée la source (7) est avantageusement déclarée au système par le module (6). La source de référence (7) est visible à chaque image panoramique.

Pour ne pas perdre la composante continue du signal, la non uniformité est retranchée par le module (6) pixel à pixel de chacune des portions d'images et la valeur moyenne de la non uniformité est ajoutée. Après recomposition des portions d'images (ou « stitching ») par le module (6), une image quasi panoramique corrigée du flux parasite interne au capteur d'images (1), flux parasite dû à l'objectif, est obtenue par le module (6). Il s'agit d'une correction en quasi temps réel d'un point de l'image.

Selon la variante considérée :

- la source proche (7) est non thermostatée et sa température est inconnue tandis que la source de calibration (8) est thermostatée. Les sources (7) et (8) sont donc distinctes. La source de calibration (8) est présente dans une partie de l'image panoramique : sa position est connue par déclaration au système (100), de même que sa température. La température apparente de la source de calibration (8) est choisie proche de celle des objets (11) d'intérêt, et en particulier d'un seuil d'alarme. La source de calibration (8) est configurée pour corriger un éventuel biais de mesure résiduel après la correction d'uniformité et améliorer la précision de détection en comparant le signal de la scène au signal de la source de calibration (8) pour déclencher une alarme ; ou
- la source proche (7) est thermostatée. La source proche (7) remplit donc la fonction de la source de calibration (8). Les sources (7) et (8) sont donc combinées en une seule source localisée à l'endroit de la référence (7) de la figure 1 ou 2. La source proche (7) fait partie du même ensemble matériel que le capteur d'images (1). La source (7) sert alors à la fois de source 7 de correction de non uniformité et de source 8 de référence de mesure de température. Le système (100) n'a donc plus besoin de source de calibration (8) et est donc plus facile à déployer, ou
- la source proche (7) n'est pas thermostatée mais sa température instantanée est connue et une calibration dynamique du capteur d'images (1) est effectuée. La source proche (7) remplie donc la fonction de la source de calibration (8). Les sources (7) et (8) sont donc combinées en une seule source localisée à l'endroit de la référence (7) de la figure 1. Si le gain est stable, un tel système (100) est plus simple à réaliser et enlève la nécessité d'un système de chauffage, d'alimentation et de boucle de régulation.

La correction des effets de transmission atmosphérique est éventuellement traitée par le module (6) avec un modèle numérique de transmission paramétré par des mesures de température et d'humidité accessibles via des capteurs intégrés au capteur d'images (1). On entend par « capteurs intégrés », des capteurs de type thermomètre et/ou hygromètre et/ou station météo par exemple.

Le module de traitement (6) est agencé et/ou programmé pour déterminer une distance entre l'objet (11) et le capteur d'images (1) en fonction d'une dimension de l'objet (11) sur une des images acquises. Le module de traitement (6) est aussi agencé et/ou programmé pour déterminer une position de l'objet (11) dans un champ d'une image acquise par le capteur d'images (1). Enfin, le module de traitement (6) est agencé et/ou programmé pour corriger la température de l'objet (11) en fonction de la distance déterminée entre l'objet (11) et le capteur d'images (1) et/ou en fonction de la position de l'objet (11) dans un champ d'une image acquise par le capteur d'images (1).

Pour le capteur d'images (1), le signal délivré d'un objet (11) de température apparente fixe est fonction de la distance de l'objet (11) au capteur (1) et de la taille angulaire de l'objet (11). La taille angulaire de l'objet (11) est connue en calculant le nombre de pixels couverts par l'objet (11). La dimension de l'objet (11) étant connue, la distance de l'objet (11) au capteur (1) est évaluée. Le signal provenant de l'objet (11) est corrigé en fonction de sa distance à l'objet (11). La correction par le module (6) est plus ou moins perfectionnée pour correspondre au mieux au relevé des points de calibration. Cela va d'une simple correction affine en fonction de la distance à une combinaison de corrections plus complexes comme des fonctions exponentielles ou de puissance par exemple.

Il est possible d'apprendre à un réseau de neurones mis en œuvre par le module (6) à reconnaitre l'objet (11) et à l'extraire dans l'image distincte ou panoramique. L'influence de la transmission atmosphérique sur la mesure de température dépend de la température et de l'hygrométrie ambiante. L'utilisation d'un modèle numérique et de mesures locales en temps réel par le système (100) ajuste cette correction.

Par ailleurs, le niveau de signal de l'arrière-plan visible autour des zones d'intérêt influence la mesure de température. La correction suivant la taille angulaire de l'objet (11) est avantageusement paramétrée par l'écart de signal par rapport à l'arrière-plan local. Une correction supplémentaire de la température de l'objet (11) en fonction de la position de l'objet (11) dans le champ du système thermographique (100) est implémentée par le module (6). Cette correction est effectuée sur chaque image acquise par le capteur (1) de la scène, hors image prise sur la source de référence proche (7) qui est déjà corrigée. Cette correction consiste à ajouter sur les objets (11) détectés une portion du contraste thermique entre l'objet (11) et le fond autour de l'objet (11) en utilisant une fonction parabolique centrée sur l'image. La correction supplémentaire compense le fait que sur certains capteurs d'images (1), la source n'a pas le même signal en champ distant suivant qu'elle est placée au centre ou en périphérie du champ et ce malgré une bonne correction de non uniformité en champ proche.

Le module de traitement (6) est agencé et/ou programmé pour déterminer des données de température de surface dudit objet (11). Le système (100) comprend en outre des moyens de mesure de température ambiante autour de l'objet (11). Le module de traitement (6) est agencé et/ou programmé pour déterminer une température interne de l'objet (11) en fonction des données de température de surface dudit objet (11) et de la température ambiante mesurée. Les moyens de mesure sont typiquement de type thermomètre et/ou hygromètre.

Le réseau de neurones mis en œuvre par le module (6) est agencé et/ou programmé pour reconnaître dans la scène le visage humain considéré comme objet d'intérêt (11). La taille d'un visage humain est connue avec une précision suffisante pour effectuer la correction (taille apparente, distance) précisée ci-dessus. Pour déterminer si une personne a de la fièvre, il faut être capable d'évaluer la température interne corporelle. Or seule la température de surface est accessible au système de thermographie infrarouge (100).

Un écart est modélisé par le module (6) entre température interne et température externe. La température externe d'un objet (11) comme le visage dépend en pratique de la température de l'air ambiant. La température de l'air ambiant mesurée localement par le capteur d'images (1) est utilisée par le module (6) pour ajuster cet écart.

La température d'un objet (11) n'est pas uniforme. Pour le visage, les yeux, les fosses nasales, les tempes, le canthus de l'œil, une bouche ouverte sont chauds tandis que le nez est plutôt froid par exemple. Les détails les plus chauds sont de petites dimensions angulaires. Les détails sont résolus par le capteur d'images (1) avec une source en champ proche (7) et/ou avec une source en champ lointain (8).

La température corporelle est déterminée par le module (6) à partir de mesures de températures sur un visage non uniforme.

On considère que les parties les plus chaudes du visage sont visibles, soit dans l'image courante, soit dans les images suivantes. Une même personne est potentiellement vue plusieurs fois par le capteur d'images (1) lors de son défilement, sous différents angles. Les visages ou les têtes sont détectés par le réseau de neurones mis en œuvre par le module (6). La zone la plus chaude du visage est relevée par le module (6). Pour éviter de trop fortes variations liées à la résolution des détails chauds, un filtrage par moyenne ou médiane parmi une proportion de pixels les plus chauds du visage est effectué par le module (6). Le visage est également partiellement masqué par un chapeau, un foulard ou un masque dans certaines situations. Dans ce cas, la température relevée est inférieure à la température des points chauds habituels masqués ici. En évaluant la température, par application d'une correction unique (normalement appliqués aux points chauds visibles), l'appréciation de la température interne est minorée.

Le système (100) est agencé et/ou programmé pour pister les objets (11) détectés d'une image à l'autre, au fur et à mesure du flux vidéo. La température corporelle est évaluée correctement aux moments où les parties les plus chaudes du visage sont présentées au capteur d'images (1), même par intermittence lors d'un mouvement par exemple.

Le module de traitement (6) est agencé et/ou programmé pour déterminer différentes valeurs de température de l'objet (11) dans le temps et déterminer la valeur maximale parmi toutes les valeurs précédemment déterminées.

Pour un même visage pisté dans le flux vidéo par le capteur (1), la température corporelle réelle est la valeur maximale d'une série de mesures récentes. Une série de mesures récentes d'un même objet (11) pisté par le capteur (1) est mise en mémoire du module (6) afin de conserver la valeur maximale pour évaluer la température interne de l'objet (11).

Le réseau de neurones mis en œuvre par le module (6) est agencé et/ou programmé pour reconnaître la nature des portions de visage imagées et différencier la présence ou non d'éléments couvrants sur le visage. A cette fin, le réseau de neurones est entrainé pour détecter ces objets (11).

Les décalages entre la température interne de l'objet (11) et la température de surface sont modélisés séparément. La correction effectuée par le module (6) dépend de la reconnaissance effectuée pour remonter à la bonne température corporelle. Quelques soit la zone détectée par le système (100), la température corporelle est correctement évaluée.

Le système (100) comprend des moyens pour générer une alerte visuelle ou sonore si la température de l'objet (11) est supérieure à une température seuil mémorisée par le module de traitement (6), ou à un écart de température supérieur à un écart seuil par rapport à des températures d'autres objets (11) imagés par le système thermographique (100).

Les moyens pour générer une alerte visuelle ou sonore sont agencés et/ou programmés pour filtrer une fausse alerte en comparant différentes températures mesurées de l'objet (11). Les moyens pour générer une alerte visuelle ou sonore sont typiquement de type message affiché mentionnant la présence d'un individu fiévreux dans une couleur rouge par exemple.

En présence d'un flux important de personnes, il est peu probable qu'une majorité d'individus soit fiévreuses. Seules les mesures différentielles dans un groupe sont donc traitées par le module (6) par modélisation statistique. Le critère de fièvre est assimilé à une surélévation anormale de température d'un ou de quelques individus par rapport à une température typique : moyenne, médiane, médiane/moyenne parmi les valeurs centrales. Cependant, il n'est pas toujours possible d'avoir un groupe de personnes en nombre significatif simultanément dans le champ de vue. Les données statistiques obtenues par le système (100) sur une période glissante sont utilisées.

Une comparaison entre le signal sur un visage et celui d'un autre visage vu par le capteur d'images (1) dans la même portion du champ de vue à un autre moment d'une période glissante est possible. Des seuils d'écart relatif de signal infrarouge variables dans le champ sont calculés par le module (6) et continûment mis à jour sur les mesures effectuées dans la même zone du champ.

Un mode hybride effectuant une détection de fièvre sur une mesure de température absolue d'une part et sur une mesure relative par rapport au signal infrarouge typique local d'autre part est réalisé.

Un niveau de confiance de la mesure relative locale en fonction de la densité locale d'échantillons obtenus dans une période glissante est calculé par le module (6). Si trop peu d'échantillons sont obtenus dans une zone, seule la mesure absolue est utilisée dans la zone correspondante. Lorsqu'ils sont disponibles simultanément, les modes absolus et relatifs sont fusionnés en assouplissant les seuils de détection individuels pour optimiser un bon taux de détection tout en limitant le taux de faux positifs.

Le module de traitement (6) est agencé et/ou programmé pour éliminer sur les images acquises par le capteur d'images (1) des points chauds sur l'objet (11) et/ou un fond entourant l'objet (11) avant de déterminer les données de température dudit objet (11).

Un nettoyage de l'image est effectué par le module (6) pour éliminer les points chauds en superposant un élément ayant une température supérieure comme une tasse à café chaude par exemple sur l'objet (11) d'intérêt. Il est possible d'éliminer le fond entourant le visage en positionnant un fond ou un objet (11) ayant une température supérieure autour de l'objet (11) d'intérêt tel qu'un visage. Une analyse de l'histogramme est ensuite réalisée par le module (6) et détermine la température de l'objet (11), en faisant la moyenne des pourcentages des points les plus élevés dans l'image nettoyée.

L'image infrarouge ne permet cependant pas d'identifier les individus ciblés lors de la détection de visages. Par exemple, si une personne est détectée par le capteur (1) au milieu d'un groupe, il est difficile de l'identifier pour l'interpeler. Il est très utile d'associer une image dans le spectre visible.

Le système (100) comprend au moins un capteur d'images de lumière visible (i.e. agencé pour capter et imager au moins un rayonnement, de préférence tous les rayonnements, ayant une longueur d'onde comprise entre 450 nm et 750 nm), couleur ou noir et blanc, agencé pour capter l'objet (11) de manière simultanée au capteur d'images (1) infrarouge.

L'au moins un capteur d'images de lumière visible (couleur ou noir et blanc) comprend une couronne 15 de capteurs d'images visibles fixes (de préférence haute résolution) observant un large panorama, d'au moins 180° et de préférence jusqu'à 360°, et qui est associé au capteur d'images (1). Le flux est continûment enregistré par les capteurs sur une durée glissante au moins plus longue que le retard entre la prise de vue de la voir infrarouge et la fin du traitement de l'information. Connaissant précisément l'instant des prises de vue infrarouge et visible, l'objet (11) détecté dans la voie infrarouge est également détecté par le module (6) dans l'enregistrement visible récent, la prise de vue étant dans la même direction, au même instant et pour le même objet (11). Une identification par le module (6) avec la voie visible est effectué suite à une détection de température anormale dans la voie infrarouge par exemple.

Le flux visible du capteur d'images de lumière visible (couleur ou noir et blanc) est affiché en temps réel par les moyens de contrôle et de communication (9). L'opérateur trouve plus facilement ses repères dans le flux visible que dans l'infrarouge. L'image visible a une fréquence de rafraîchissement plus rapide que l'image infrarouge. L'image infrarouge fournie par les capteurs fixes a une fréquence supérieure à 10Hz, alors que l'image panoramique infrarouge formée par rotation d'un capteur a une cadence plus limitée (de l'ordre du Hertz).

Lorsque le système (100) détecte un objet (11) avec une datation précise, on y associe la piste dont l'objet (11) était proche de la détection infrarouge au même moment. La température et le statut de fièvre sont alors directement associés et affichés par les moyens de contrôle et de communication (9) dans l'image panoramique visible à côté des visages détectés en mouvement par exemple.

Afin d'avoir les meilleurs résultats de détection par le réseau de neurones mis en œuvre par le module (6), une préparation des images par le module (6) est mise en œuvre. Les images acquises ont une dynamique de quatorze bits, mais uniquement une partie de cette dynamique est utilisée localement. Les réseaux de neurones fonctionnent mieux lorsque la dynamique est pleinement utilisée. Pour cela un procédé de mappage tonal (ou « tone-mapping ») mis en œuvre par le module (6) réduit la dynamique à huit bits et améliore l'utilisation de la dynamique. L'information temporelle et/ou de température est utilisée par le module (6) pour faire en sorte que le contraste soit maximal sur les objets (11) d'intérêts. Dans le cas où les objets (11) sont les visages, ceux-ci se distinguent du fond par le fait qu'ils ne sont pas fixes ou/et qu'ils sont à une température différente du fond. Si la température est estimée de l'intensité d'un pixel, un intervalle d'intensité de quatorze bits d'intérêt [m, M] (m et M étant des paramètres de l'algorithme qui sont des nombres qui définissent l'intervalle des intensités attendues des objets : m étant la valeur minimale de l'intervalle et M étant la valeur maximale) qui contiennent les intensités attendues des objets (11) est défini, et par conversion affine et projette cet intervalle de quatorze bits sur un intervalle de huit bits, par exemple [102, 230] (La notation [a, b] ici correspondant à la définition d'un intervalle entre a et b, s'agissant ici de l'intervalle des valeurs entre 102 et 230, l'intervalle étant donc compris dans celui de [0, 255] des valeurs 8 bits). Le reste de l'image est rajouté optionnellement, en convertissant par transformation affine l'intervalle décrit par le minimum dans un voisinage du pixel et m vers [0, 102], et l'intervalle décrit par M et le maximum dans un voisinage de pixel vers [230, 255]. La conversion est ainsi affine par morceaux.

En variante, une image de fond est déterminée par le module (6), par exemple en prenant le médian en chaque pixel sur une série d'images prises avec un certain écart de temps entre chaque image, et mise à jour régulièrement. L'image de fond, si elle est bien formée, ne doit pas contenir d'objets (11) d'intérêts. De plus, il est supposé que le fond est plus froid que les objets (11), en tout cas aux endroits où l'on pourrait en voir. Cette image de fond est utilisée par le module (6) pour déterminer une transformation de l'image distincte courante qui va à la fois permettre de voir le fond, mais aussi de mettre en valeur ce qui est plus chaud localement que le fond. Cette implémentation consiste en le calcul par le module (6) de l'image de fond Im par exemple en prenant le médian de chaque pixel sur une série d'images distinctes prises avec un certain écart temporel. Une version bassement résolue L de cette image est ensuite construite par le module (6) par pyramide Gaussienne, celle-ci étant redimensionnée à la taille d'origine et soustraite à l'image de fond Im pour obtenir l'image H. Ceci a pour effet d'enlever les informations basses fréquences de l'image originale et de compresser la dynamique. Les quantiles à 1% et 90% de l'image H sont ensuite calculés par le module (6), la non-symétrie est, pour être plus robuste, à la présence d'objets (11) chauds dans le fond. Les images m et M sont ensuite calculées en ajoutant respectivement les quantiles précédemment calculés de H à l'image L. Enfin, pour l'image courante, pour chaque pixel, si l'intensité est entre le minimum dans un voisinage de l'image et m, nous convertissons l'intensité avec une transformation affine dans l'intervalle [0, 25]. De même nous convertissons par transformation affine une intensité dans [m, M] vers l'intervalle [25, 102], et l'intervalle [M, maximum dans un voisinage] vers [102, 255]. Avant d'être fournie au réseau de neurones qui est mis en œuvre par le module (6), l'image est recentrée autour de 0.

Les images ont été préalablement calibrées en intensité à l'aide des systèmes et/ou procédés décrits dans la présente invention.

On va maintenant décrire un procédé thermographique infrarouge pour la détection de température de l'objet (11), mis en œuvre par le système (100) comprenant une collection de rayonnements infrarouges par le capteur d'images (1) infrarouge thermique et une construction d'au moins une image à partir de ces rayonnements. Le procédé comprend un entrainement en rotation du capteur (1) autour de l'axe de rotation (10) par le support d'entrainement (2), le capteur d'images (1) étant fixé sur le support d'entrainement (2) de sorte que, lors de la rotation du support d'entrainement (2), le capteur (1) image différentes zones distinctes entourant le système thermographique comprenant ledit capteur (1) et ledit support d'entrainement (2), le capteur d'images (1) faisant une acquisition de plusieurs images distinctes de sorte que la combinaison de ces différentes images forme un panorama continu d'au moins 180 degrés autour de l'axe de rotation du support d'entrainement (2). Le procédé comprend également une détermination par le module de traitement (6), de données de température dudit objet (11) à partir des images acquises par le capteur d'images (1).

Au moins une des images distinctes de chaque panorama image la source de référence infrarouge en champ proche (7) dite source de correction de non-uniformité. Le module de traitement (6) corrige une non-uniformité spatiale des images acquises par le capteur (1) en fonction de la source de correction de non-uniformité.

La source de correction de non-uniformité est située à une distance du capteur d'images (1) tel que au moins une image acquise, dite image de référence, image uniquement la source de correction de non-uniformité.

Le module de traitement (6) corrige la non-uniformité spatiale en retranchant pixel à pixel, sur chacune des images acquises, la non-uniformité spatiale de l'image de référence imageant la source de correction de non-uniformité et en y ajoutant la valeur moyenne de cette non-uniformité.

Le procédé comprend également un thermostatage (La source de calibration (8) est de préférence thermostatée à une température supérieure à 33 degrés et/ou inférieure à 40 degrés) et/ou une mesure de la température de la source de référence infrarouge, dite source de calibration (8) mais également au moins une des images distinctes de chaque panorama imageant cette source de calibration (8). Le module de traitement (6) calibre en température les images acquises d'un même panorama en fonction de cette source de calibration.

Le module de traitement (6) détermine une distance entre l'objet (11) et le capteur d'images (1) en fonction de la dimension de l'objet (11) sur une des images acquises et/ou détermine la position de l'objet (11) dans un champ d'une image acquise par le capteur d'images (1). Le module de traitement (6) corrige la température de l'objet (11) en fonction de la distance déterminée entre l'objet (11) et le capteur d'image (1) et/ou en fonction de la position de l'objet (11) dans un champ d'une image acquise par le capteur d'images (1).

Le module de traitement (6) détermine des données de température de surface dudit objet (11). Le procédé comprend en outre une mesure de température ambiante autour de l'objet (11), le module de traitement (6) déterminant une température interne de l'objet (11) en fonction des données de température de surface dudit objet (11) et de la température ambiante mesurée.

De plus, le module de traitement (6) détermine différentes valeurs de température de l'objet (11) dans le temps et détermine la valeur maximale parmi toutes les valeurs précédemment déterminées.

Le procédé comprend une génération d'une alerte visuelle ou sonore si la température de l'objet (11) est supérieure à une température seuil mémorisée par le module de traitement (6). Le procédé comprend une génération d'une alerte visuelle ou sonore si la température de l'objet (11) a un écart de température supérieur à un écart seuil par rapport à des températures d'autres objets (11) imagés par le système thermographique (100).

La génération de l'alerte visuelle ou sonore filtre une fausse alerte en comparant différentes températures mesurées de l'objet (11).

Le procédé comprend une captation, par au moins un capteur d'images de lumière visible (couleur ou noir et blanc), de l'objet (11) de manière simultanée au capteur d'images (1) infrarouge.

Le module de traitement (6) élimine sur les images acquises par le capteur d'images (1) des points chauds sur l'objet (11), et/ou un fond entourant l'objet (11) avant de déterminer les données de température dudit objet (11).

Le système (100) comprend un capteur d'images (1) infrarouge thermique à microbolomètres de 640 par 480 éléments équipé d'un objectif ouvert à f/1.1 de focale 25mm, modèle TAU 2.7 640 fourni par la société FLIR Systèmes.

Le champ horizontal de ce capteur (1) est de l'ordre de 25°. Le champ vertical est de l'ordre de 20° ce qui permet après les corrections géométriques d'obtenir l'image d'un bandeau panoramique de hauteur 18°.

L'axe optique est indexable manuellement en site dans les positions 0° et plus ou moins 6° par rapport à l'horizontale, ce qui permet d'adapter rapidement l'angle de vue en site à la situation rencontrée à l'installation : visée horizon, visée ciel ou visée sol par exemple. Si les positions ne conviennent pas, une indexation continue est possible, jusqu'à plus ou moins 18°. L'intérêt des positions indexées est qu'elles permettent de définir l'orientation du capteur d'images (1) avec une précision suffisante pour appliquer des corrections géométriques acceptables sans calibration supplémentaire.

Le système (100) comprend également le support d'entrainement (2) agencé pour entrainer en rotation le capteur (1) autour d'un axe de rotation (10).

Le moteur d'entraînement (4) est un servomoteur brushless (« sans balais ») compact de faible puissance, avec un haut rendement et un couple élevé, de modèle TC 40 0.32 de la gamme du fabricant MPC équipé d'un résolveur d'une grande résolution. Le choix du résolveur est dicté par la nécessité d'une résolution angulaire élevée, compatible de la précision de positionnement attendue.
L'électronique de pilotage de la motorisation est constituée d'un module WHISTLE de ELMO avec entrée résolveur (10 à 15bits).

Seize prises de vue sur des secteurs angulaires successifs sont réalisées par le capteur (1) et constituent une image panoramique infrarouge sur 360°. L'image panoramique réalisée à un champ de 360° par 18°. Son format est de 16 par 640 colonnes par 512 lignes qui est égal à 10240 colonnes par 512 lignes soit 5 242 880 pixels. Sa résolution spatiale est de l'ordre de 0,6mrad (18°/512).

La cadence de rafraichissement des images panoramiques par le capteur (1) est de 0,44Hz, soit une nouvelle image 360° toutes les 2,3 secondes. Cette cadence est limitée par la fréquence image du capteur d'images (1) infrarouge à microbolomètres, bridée à 7.5Hz pour des raisons d'exportabilité. La fréquence image de 7.5Hz correspond à une période image de 1000/7,5 soit 133 ms par secteur angulaire, à répartir entre la phase d'imagerie et la phase de saut. Le temps nécessaire à la phase d'imagerie est égal au minimum au temps de réponse thermique du détecteur microbolomètre, soit $3\tau$ qui correspond à 36ms, additionné au temps de lecture égal à 33ms, soit au total 69ms minimum.

Un réglage dynamique du mouvement du capteur (1) est effectué dans un premier temps pour tester les limites de réponse du système (100)

- Une phase saut est effectuée en environ 40ms,
- Une phase imagerie dure donc jusqu'à environ 90ms (soit 133-40), soit plus que les 69ms nécessaires à la formation et à la lecture de l'image sur le détecteur à microbolomètres,
- La phase retour dure environ 120ms pour un tour quasi-complet.

Pour ce réglage, la consommation moyenne du système (100) reste très faible, de l'ordre de 5W. Le système (100) est agencé pour faire la capture d'une image panoramique en 1,6s soit en 0,62Hz pour un panorama complet.

En pratique, pour limiter encore plus la consommation et réduire l'inertie nécessaire pour la partie fixe, la chronologie des phases est enchaînée de la manière suivante, dans le cas de l'imagerie d'un panorama complet sur 360°:

- Durée d'une phase saut : Ts=57ms
- Durée d'une phase imagerie : Ti=76ms (= 133-57)
- Durée de la phase retour : Tr=190ms

La durée de 190ms correspond à la perte d'une image complète pendant la phase de retour (57+76+57=190). Dans ces conditions, la consommation moyenne du système (100) est environ de 4W. La durée d'analyse d'un panorama complet de 360° par le module (6) est de 17 par 133 soit 2 261s, ce qui correspond à une cadence image de 0.44Hz pour un panorama complet. Cette consommation est compatible avec les possibilités d'alimentation des équipements intégrés et embarqués.

Le système (100) est agencé pour basculer d'un mode panoramique vers un mode champ réduit mais haute cadence image (ou « staring »). En effet, il est possible d'orienter le capteur d'images (1) dans la direction voulue en gisement, et de maintenir constante la consigne de l'angle de la rotation. La cadence image est alors portée jusqu'à la cadence maximale du capteur images (1), soit 7.5 à 30Hz suivant le modèle de capteur d'images choisi.

Il est avantageux de tirer profit de la haute cadence image pour accrocher la poursuite en gisement sur une cible (11) d'intérêt au centre du champ avec un algorithme classique de corrélation d'images. Cette conception fonctionne dans des modes intermédiaires et surveille une zone utile uniquement avec un balayage réduit à quelques secteurs ne représentant pas 360°. Il est possible d'ajuster électroniquement l'origine du balayage du capteur (1) pour optimiser encore l'utilisation et la couverture.

Le système (100) est compatible avec l'utilisation de capteur d'images visibles ou proches infrarouges moyennant l'adaptation du hublot. Dans ce cas, le temps nécessaire à l'acquisition d'une image par le capteur (1) ne comporte plus les mêmes contraintes que pour un détecteur à microbolomètres puisqu'il est réduit à quelques millisecondes. Il est ainsi envisageable de monter à des cadences de l'ordre de 1Hz pour une image panoramique complète.

Le système (100) comprend la source de référence en champ proche (7) constituée d'un masque passif ou actif suivant les variantes. Le masque en polyamide est peint avec une peinture noire mate pour présenter une bonne émissivité dans l'infrarouge. Cette source (7) masque entièrement le premier des seize secteurs (aussi appelé « image distincte ») balayés par le capteur d'images (1), l'image panoramique exploitable est donc au plus de 337.5°. Suivant les variantes, une source de calibration distante (8) à 37°C, développée par HGH sous le nom de CN37 est placée à quelques mètres de distance du capteur d'images (1) pour couvrir au moins 10 par 10 pixels.

Le capteur d'images (1) thermique à microbolomètres est mis en œuvre avec sa calibration usine avec une prise en compte des paramètres ambiants comme la température par exemple et d'une correction un point sur l'obturateur interne.

L'intégralité des calculs et des traitements des signaux décrits par la suite sont réalisés par le module (6).

Le capteur d'images (1) acquiert donc seize images secteur à la suite : la première est l'image de référence (imageant la source 7) qui sert à une correction d'offset supplémentaire, les quinze autres suivent et visualise le panorama. L'image du premier secteur est utilisée pour déterminer la correction d'offset supplémentaire à appliquer. Cette image a pour valeurs :

[Math 1]

$$S_0(m,n)$$

, les images suivantes ont pour valeurs :

[Math 2]

$$S_i(m,n), i \in [1, 15].$$

Les images corrigées de l'offset supplémentaire deviennent :

[Math 3]

$$Sc_i(m,n) = Sc_i(m,n) - S_0(m,n) + \overline{S_0(m,n)} \quad i \in [1, 15]$$

Pour limiter l'impact du bruit temporel de $S_0$ sur la correction, une moyenne temporelle glissante de :

[Math 4]

$$S_0$$

est calculée sur, par exemple, dix images avant d'appliquer cette moyenne pour la correction supplémentaire, le bruit spatial fixe évoluant peu rapidement dans le temps. Le premier secteur une fois corrigé, doit être quasiment uniforme, c'est-à-dire que l'écart type est quasiment égal au bruit temporel. L'ajout de la moyenne dans la correction supplémentaire permet de ne pas perdre la composante continue dans le traitement. Une fois appliquée, la correction est parfaite sur une scène à la température ambiante de la source de référence proche (7). L'avantage de cette correction est d'être en quasi temps réel et sur une source de référence externe au système (100).

Dans l'une des images secteur acquise par le capteur (1) apparait l'image de la source de calibration (8). Elle est suffisamment étendue pour faire une moyenne spatiale, additionnée d'une moyenne temporelle afin d'éliminer la composante de bruit temporel avant soustraction au signal de l'image. La réponse du capteur d'images (1) et la température apparente de la source (8) sont suffisamment stables dans le temps pour qu'on puisse les considérer constante et les moyenner pour en réduire le bruit temporel. Le niveau moyen relevé est comparé à tout point de l'image pour déterminer la température de ce point. Pour ce faire, le système (100) connait la position de la source de calibration (8) dans l'image stable d'une image panoramique à la suivante et la température de la source, stable elle aussi.

Pour déduire la température de chaque point de l'image, il faut calibrer la réponse du capteur d'images (1) autour de la température d'intérêt, soit la température de la source de calibration (8). Suivant l'application, il est nécessaire de calibrer le capteur d'images (1) en usine en lui présentant un corps noir dont la température varie de l'ambiante à quelques centaines de degrés Celsius. Pour une application de mesure de fièvre, une calibration de quelques points, par exemple deux ou trois, autour de la température de référence et une loi affine sont suffisantes. Dans ce dernier cas, le capteur d'images (1) présente un Gain en niveaux numériques par Kelvin autour de la température de référence. Le module (6) est agencé et/ou programmé pour calculer la température de chaque pixel en fonction de la température de la source de référence et de la différence de signal entre le pixel et la source :

[Math 5]

$$T_i(m,n) = \left(Sc_i(m,n) - \overline{S_{ref}(k,l,t_1,t_2)}\right)/Gain + Tref \ i \in [1\,,15]$$

Dans la variante où il n'y a pas de source de calibration (8), la source proche (7) est thermostatée ou de température connue et joue le rôle de source de référence 8. Le calcul suivant s'applique :

[Math 6]

$$T_i(m,n) = \left(Sc_i(m,n) - \overline{S_{ref}(m,n,t_1,t_2)}\right)/Gain + Tref \ i \in [1\,,15]$$

Dans la variante où il n'y a pas de source de calibration (8) ni de source thermostatée, il faut disposer d'une calibration préalable du capteur d'images (1) pour effectuer le calcul :

[Math 7]

$$T_i(m,n) = \left(Sc_i(m,n) - \overline{S_{ref}}\right)/Gain + Tref \ i \in [1\,,15]$$

La température mesurée d'un objet (11) dépend de la taille angulaire apparente de cet objet (11) et de sa distance au capteur d'images (1). Le signal est exprimé par la formule suivante :

[Math 8]

$$Signal_{DL} = Signal0_{DL} \times \left(\frac{SourceAngularSize}{SourceAngularSize0}\right)^{(Power)} \times e^{(-Sigma \times (distance - distance0))}$$

Plus simplement, pour un objet (11) de taille connue, par exemple un visage, on applique une correction affine en distance sur le signal des pixels dont on connait la distance au capteur d'images (1) avant la conversion en température :

[Math 9]

$$T_i(m,n) = \frac{\left(Sc_i(m,n) - \overline{S_{ref}(k,l,t_1,t_2)} + a*\left(D_i(m,n) - D_{ref}\right) + b\right)}{Gain} + Tref$$
$$i \in [1\,,15]$$

Selon la variante où il n'y a pas de source de calibration (8), la source proche (7) thermostatée et joue le rôle de source de référence. Le calcul suivant s'applique :

[Math 10]

$$T_i(m,n) = \left(Sc_i(m,n) - \overline{S_{ref}(m,n,t_1,t_2)} + a*D_i(m,n) + b\right)/Gain + Tref \ i \in [1\,,15]$$

Selon la variante où il n'y a pas de source de calibration (8) ni de source thermostatée, il faut disposer d'une calibration préalable du capteur d'images (1) pour effectuer le calcul :

[Math 11]

$$T_i(m,n) = \left(Sc_i(m,n) - \overline{S_{ref}} + a * D_i(m,n) + b\right)/Gain + Tref \; i \in [1, 15]$$

Pour déterminer la distance à laquelle se trouve l'objet (11) d'intérêt par rapport au capteur (1), il faut le détecter dans l'image panoramique. Un réseau de neurones mis en œuvre par le module (6) est utilisé pour apprendre à reconnaitre des objets (11) d'intérêts, ici on choisira les visages dans l'infrarouge. Il est commun de le faire dans le visible. La détection est réalisée dans l'infrarouge pour détourer la présence de visages dans l'image panoramique. Le réseau est pré-entrainé sur des images visibles converties en niveaux de gris, et affiné sur des images infrarouges annotées. Le réseau est appris, et appliqué par le module (6) sur des secteurs de l'image. Les résultats sont combinés pour obtenir la détection sur l'image panoramique complète.

Le réseau de neurones a ainsi appris à détecter et détourer des zones correspondant à des visages dans l'image panoramique. La taille d'une zone permet de remonter à la distance du visage en supposant que la personne a une taille moyenne d'un mètre soixante-quinze par exemple et que la largeur du visage vaut par exemple treize pourcents de la taille du sujet. La correction en distance est appliquée par le module (6) sur les pixels de la zone correspondant au visage et la température de chaque pixel est déterminée.

Un réseau de détection sans ancrage en un seul passage (ou « single-stage Anchor-Free ») est utilisé, et plus particulièrement un réseau à entrainement rapide (ou « Training-Time-Friendly Network » (TTFNet)). (papier: https://arxiv.org/abs/1909.00700). Les réseaux de détections sont typiquement de type à un seul passage (« single-stage ») ou à deux passages (« two-stage »). Parmi les réseaux à un seul passage (« single-stage »), on distingue les réseaux à ancrage (ou « Anchor-based ») qui spécialisent plusieurs « têtes » de détection pour des tailles/formes d'objets cibles fixées (chaque tête étant attribuée un rectangle - ou « Anchor-box » -, qui peut être interprétée comme la taille/forme typique d'un objet pour cette tête de détection). Les réseaux sans ancrage (ou « Anchor-free ») ne font pas cette spécialisation, et des travaux récents comme « Bridging the Gap Between Anchor-Based and Anchor-Free Detection via Adaptive Training Sample Selection », CVPR 2020, Zhang et al. leur permettent d'avoir une performance identique à ceux à ancrage.

En ce qui concerne l'architecture réseau, la partie tête (ou « head ») du réseau correspond à la partie du réseau qui ne fait pas partie du cœur de réseau (ou « backbone »). Le cœur de réseau est en version nuances de gris, il prend en entrée une image à un seul canal, au lieu d'une image en couleur.

Le réseau est entrainé avec l'algorithme d'apprentissage ADAM (« Adam: A method for stochastic optimization », 2014, Diederik Kingma et Jimmy Ba). Le taux d'apprentissage est divisé par deux dès que le score d'entrainement ne s'améliore pas sur trois périodes consécutives.

Une augmentation de jeux de données adaptée aux nuances de gris et à l'infrarouge en particulier est utilisée. Pour ce qui est de la perturbation visuelle des entrées, des rotations horizontales, des changements d'échelle et des translations sont effectués comme le font habituellement les réseaux de détection. De plus une transformation d'histogramme linéaire par morceaux à cinq points est appliquée, tirée uniformément sur [0,255]. L'intérêt de cette étape d'augmentation de jeux de données est de favoriser une plus grande insensibilité au contraste et au niveau d'intensité lumineuse de la scène et des objets (11) cibles pour le réseau. Ensuite, un bruit gaussien d'une déviation standard tiré uniformément sur [0,40] est rajouté.

Le réseau de détection d'objet (11) est d'abord entrainé sur des données visibles en nuances de gris puis sur des données infrarouges. Le réseau apprend mieux car les données visibles sont plus nombreuses. Les données infrarouges ayant leur dynamique sur quatorze bits, elles ne sont pas directement utilisées pour le réseau. Les réseaux de neurones prennent fréquemment des images dont la dynamique disponible est normalisée entre -1 et 1 ou -127.5 et 127.5 par exemple. La dynamique normalisée entre -127.5 et 127.5 est utilisée. Un procédé de mappage tonal (ou « tone-mapping ») mis en œuvre par le module (6) est utilisé pour diminuer la dynamique à huit bits, tout en utilisant la dynamique disponible au mieux.

Le réseau à entrainement rapide (ou TTFNet) est adapté afin de répondre à plusieurs besoins de détection. L'adaptation de la fonction de perte est réalisée pour bien se comporter sur différentes tailles d'images cibles. En effet, sans changement, le rapport entre les parties qui composent la fonction de perte dépend de la taille de l'entrée du réseau et du nombre de classes. L'adaptation de la fonction de perte est également réalisée pour que durant l'apprentissage, le réseau essaye tout autant de diminuer la quantité de faux positifs dans les images avec beaucoup ou peu de cibles tandis que le réseau à entrainement rapide (ou TTFNet) divise la pénalisation par le nombre de cibles.

De plus, un terme a été rajouté à la fonction de perte afin de pénaliser de manière plus forte le score de présence d'objet (11) le plus élevé par classe et image du mini-lot (ou « mini-batch ») aux endroits sans objets (11). Cela a pour effet de diminuer légèrement la présence de fausses détections.

La fonction de perte, en reprenant la notation du réseau à entrainement rapide (ou TTFNet https://arxiv.org/abs/1909.00700), est donc :

[Math 12]

$$L = L_{pos} + L_{neg} + L_{neg2} + 5\,L_{reg}$$

Soit $B$ la dimension du lot (ou « batch »), et $N_p$ la taille de la carte de chaleur (ou « heatmap ») du mini-lot

[Math 13]

$$N_p = \frac{B.W.H}{r^2}$$

, alors

[Math 14]

$$L_{pos} = -\frac{1}{M}\sum_{bijc}\left(1 - \widehat{H_{bijc}}\right)^2 \log\left(\widehat{H_{bijc}}\right) 1_{\left(H_{bijc}==1\right)}$$

[Math 15]

$$L_{neg} = -\frac{1e5}{N_p.c}\sum_{bijc}\left(1 - H_{bijc}\right)^4 \widehat{H_{bijc}}^2 \log\left(1 - \widehat{H_{bijc}}\right) 1_{H_{bijc}<1}$$

W.H correspond à la taille de l'image analysée pendant l'apprentissage et ultérieurement pour la détection (identique à la taille d'un secteur). R correspond au facteur « output stride », soit le pas de détection fixé à 4. Pour rappel, $M$ est le nombre d'objets (11) présents dans les images du mini-lot.

[Math 16]

$$M = \sum_{bijc} 1_{H_{bijc}== 1}$$

b est l'indice sur le lot.
Pour faire le lien avec le réseau à entrainement rapide (ou TTFNet),

[Math 17]

$$L_{loc} = L_{pos} + \frac{N_p.c}{1e5}\left(\frac{1}{M}\right) L_{neg}$$

$L\_pos$ encourage le réseau à prédire 1 sur la carte de chaleur si un objet (11) est présent. La présente invention divise la contribution de chaque pixel concerné par le nombre d'objets (11).

[Math 18]

$$L\_neg$$

encourage le réseau à prédire 0 sur la carte de chaleur si un objet (11) n'est pas présent (avec la technique, introduite avec « Cornernet: Detecting objects as paired keypoints », ECCV 2018, Hei Law et Jia Deng, pour diminuer la pénalisation autour des centres des objets (11) pour prendre en compte l'imprécision de la définition du centre des objets (11)). On normalise par le nombre de pixels de la carte de chaleur où il faut prédire 0. La carte de chaleur ayant c canaux (un canal par classe) et $N_p$ pixels, on normalise par

[Math 19]

$$N_p . c.$$

M est soustrait, mais M est très négligeable devant

[Math 20]

$$N_p$$

Enfin, on multiplie par cent mille afin de donner une importance beaucoup plus forte à

[Math 21]

$$L_{neg}$$

par rapport à

[Math 22]

$$L_{pos}$$

Ce ratio fait que le seuil de détection optimal du réseau final se retrouve à environ 0.20. Sans ces modifications, le rapport entre

[Math 23]

$$L_{pos}$$

et

[Math 24]

$$L_{neg}$$

dépend du nombre de pixels de l'image, et donc le seuil optimal dépend de la taille de l'image, ainsi que du nombre de classes.

Enfin

[Math 25]

$$L_{neg2}$$

, qui contribue légèrement à la fonction de perte, est défini par :

[Math 26]

$$L_{neg2} = \frac{1}{B.c} \sum_{bc} MAX_{ij} \left( \left( 1 - H_{bijc} \right)^4 \widehat{H_{bijc}}^2 \log\left( 1 - \widehat{H_{bijc}} \right) 1_{H_{bijc} < 1} \right)$$

Bien sûr, l'invention n'est pas limitée aux exemples qui viennent d'être décrits et de nombreux aménagements peuvent être apportés à ces exemples sans sortir du cadre de l'invention.

Bien entendu, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

**Revendications**

1. Système thermographique infrarouge configuré pour la mesure de température d'un objet (11) comprenant :

   - un capteur d'images (1) infrarouges thermiques agencé pour collecter des rayonnements infrarouges et construire au moins une image à partir de ces rayonnements,
   - un support d'entrainement (2) agencé pour entrainer en rotation le capteur autour d'un axe de rotation, le capteur d'images (1) étant fixé sur le support d'entrainement (2) de sorte que, lors d'une rotation du support d'entrainement (2), le capteur image différentes zones distinctes entourant le système thermographique,
   le capteur d'images (1) étant agencé pour une acquisition de plusieurs images distinctes de sorte que la combinaison de ces différentes images forme un panorama continu d'au moins 180 degrés autour de l'axe de rotation du support d'entrainement (2),
   - un module de traitement (6) agencé et/ou programmé pour mesurer une température dudit objet (11) à partir des images acquises par le capteur d'images (1),
   **caractérisé en ce qu'**il comprend une source de référence infrarouge en champ proche (7) dite source de correction de non-uniformité, et un système optique reliant optiquement la source de référence infrarouge en champ proche (7) au capteur d'images (1), le support d'entrainement (2) étant agencé pour entrainer en rotation le capteur autour d'un axe de rotation, le capteur d'images (1) étant fixé sur le support d'entrainement (2) de sorte qu'au moins une des images distinctes de chaque panorama image la source de correction de non-uniformité, le module de traitement (6) étant agencé et/ou programmé pour corriger une non-uniformité spatiale des images acquises en fonction de la source de correction de non-uniformité,
   et **caractérisé en ce que** la source de correction de non-uniformité est située à une distance du capteur d'images (1) telle que au moins une image acquise, dite image de référence, image uniquement la source de correction de non-uniformité,
   et **en ce que** la source de référence infrarouge en champ proche (7) est suffisamment proche du capteur d'images (1) pour être située en dehors de la profondeur de champ du système optique reliant optiquement la source (7) au capteur (1), de sorte que, pour au moins une position du support d'entrainement (2), le capteur (1) dans le plan focal du système optique soit agencé pour n'intercepter que des rayons lumineux en provenance de la source (7).

2. Système thermographique infrarouge selon la revendication 1, **caractérisé en ce que** le système optique se situe entre la source de référence en champ proche (7) et le capteur d'images (1).

3. Système thermographique infrarouge selon l'une quelconque des revendications 1 à 2, **caractérisé en ce que** le module de traitement (6) est agencé et/ou programmé pour corriger la non-uniformité spatiale en retranchant pixel à pixel, sur chacune des images acquises, la non-uniformité spatiale de l'image de référence imageant la source de correction de non-uniformité.

4. Système thermographique infrarouge selon l'une quelconque des revendications précédentes, **caractérisé en ce qu'**il comprend une source de référence infrarouge, dite source de calibration (8), thermostatée ou équipée de moyens de mesure de sa température, au moins une des images distinctes de chaque panorama imageant cette source de calibration, le module de traitement (6) étant agencé et/ou programmé pour calibrer en température les images acquises d'un même panorama en fonction de cette source de calibration.

5. Système thermographique infrarouge selon la revendication 4, **caractérisé en ce que** la source de calibration est thermostatée à une température supérieure à 33 degrés et/ou inférieure à 40 degrés.

6. Système thermographique infrarouge selon l'une quelconque des revendications précédentes, **caractérisé en ce que** le module de traitement (6) est agencé et/ou programmé pour :

   - déterminer une distance entre l'objet (11) et le capteur d'images (1) en fonction d'une dimension de l'objet (11) sur une des images acquises et/ou déterminer une position de l'objet (11) dans un champ d'une image acquise par le capteur d'images (1),
   - corriger la température de l'objet (11) en fonction de la distance déterminée entre l'objet (11) et le capteur d'image et/ou en fonction de la position de l'objet (11) dans le champ d'une image acquise par le capteur d'images (1).

7. Système thermographique infrarouge selon l'une quelconque des revendications précédentes, **caractérisé en ce qu'**il comprend au moins un capteur d'images (1) de lumière visible, agencé pour capter l'objet (11) de manière simultanée au capteur d'images (1) infrarouge.

8. Système thermographique infrarouge selon l'une quelconque des revendications précédentes, **caractérisé en ce que** le module de traitement (6) est agencé et/ou programmé pour mesurer une température de surface dudit objet (11), le système comprenant en outre des moyens de mesure de température ambiante autour de l'objet (11), le module de traitement (6) étant agencé et/ou programmé pour mesurer une température interne de l'objet (11) en fonction de la température de surface dudit objet (11) et de la température ambiante mesurée.

9. Système thermographique infrarouge selon l'une quelconque des revendications précédentes, **caractérisé en ce que** le module de traitement (6) est agencé et/ou programmé pour déterminer différentes valeurs de température de l'objet (11) dans le temps et de déterminer la valeur maximale parmi toutes les valeurs précédemment déterminées.

10. Système thermographique infrarouge selon l'une quelconque des revendications précédentes, **caractérisé en ce qu'**il comprend des moyens pour générer une alerte visuelle ou sonore si la température de l'objet (11) :

- est supérieure à une température seuil mémorisée par le module de traitement (6), ou
- a un écart de température supérieur à un écart seuil par rapport à des températures d'autres objets (11) imagés par le système thermographique.

11. Système thermographique infrarouge selon la revendication 10, **caractérisé en ce que** les moyens pour générer une alerte visuelle ou sonore sont agencés et/ou programmés pour filtrer une fausse alerte en comparant différentes températures mesurées de l'objet (11).

12. Système thermographique infrarouge selon l'une quelconque des revendications précédentes, **caractérisé en ce que** le module de traitement (6) est agencé et/ou programmé pour éliminer sur des images acquises par le capteur d'images (1) :

- des points chauds sur l'objet (11), et/ou
- un fond entourant l'objet (11) avant de mesurer une température dudit objet (11).

13. Procédé thermographique infrarouge pour la mesure de température d'un objet (11) comprenant

- une collection de rayonnements infrarouges par un capteur d'images (1) infrarouges thermiques muni d'un système optique et une construction d'au moins une image à partir de ces rayonnements,
- un entrainement en rotation du capteur autour d'un axe de rotation par un support d'entrainement (2), le capteur d'images (1) étant fixé sur le support d'entrainement (2) de sorte que, lors de la rotation du support d'entrainement (2), le capteur image différentes zones distinctes entourant un système thermographique comprenant ledit capteur et ledit support d'entrainement, le capteur d'images (1) faisant une acquisition de plusieurs images distinctes de sorte que la combinaison de ces différentes images forme un panorama continu d'au moins 180 degrés autour de l'axe de rotation du support d'entrainement (2),
- une mesure, par un module de traitement (6), de température dudit objet (11) à partir des images acquises par le capteur d'images (1), l'au moins une des images distinctes de chaque panorama imageant une source de référence infrarouge en champ proche (7) dite source de correction de non-uniformité, le module de traitement (6) corrigeant une non-uniformité spatiale des images acquises en fonction de la source de correction de non-uniformité, la source de correction de non-uniformité étant située à une distance du capteur d'images (1) tel que au moins une image acquise, dite image de référence, image uniquement la source de correction de non-uniformité,

la source de référence infrarouge en champ proche (7) étant suffisamment proche du capteur d'images (1) pour être située en dehors de la profondeur de champ du système optique reliant optiquement la source (7) au capteur (1), de sorte que, pour au moins une position du support d'entrainement (2), le capteur (1) dans le plan focal du système optique n'intercepte que des rayons lumineux en provenance de la source (7).

14. Procédé thermographique infrarouge selon la revendication 13, **caractérisé en ce que** le module de traitement (6) corrige la non-uniformité spatiale en retranchant pixel à pixel, sur chacune des images acquises, la non-uniformité spatiale de l'image de référence imageant la source de correction de non-uniformité.

15. Procédé thermographique infrarouge selon l'une quelconque des revendications 13 à 14, **caractérisé en ce que** le module de traitement (6) :

- détermine une distance entre l'objet (11) et le capteur d'images (1) en fonction d'une dimension de l'objet (11) sur une des images acquises et/ou détermine une position de l'objet (11) dans un champ d'une image acquise par le capteur d'images (1),
- corrige la température de l'objet (11) en fonction de la distance déterminée entre l'objet (11) et le capteur d'image et/ou en fonction de la position de l'objet (11) dans un champ d'une image acquise par le capteur d'images (1).

16. Procédé thermographique infrarouge selon l'une quelconque des revendications 13 à 15, **caractérisé en ce que** le module de traitement (6) élimine sur des images acquises par le capteur d'images (1) :

- des points chauds sur l'objet (11), et/ou
- un fond entourant l'objet (11) avant de mesurer une température dudit objet (11).

**Patentansprüche**

1. Infrarot-Thermographiesystem, das zum Messen der Temperatur eines Objekts (11) konfiguriert ist, umfassend:

- einen Infrarot-Wärmebildsensor (1), der dazu angeordnet ist, Infrarotstrahlungen zu sammeln und aus diesen Strahlungen mindestens ein Bild zu erstellen,
- einen Antriebsträger (2), der so angeordnet ist, dass er den Sensor um eine Drehachse in Drehung versetzt, wobei der Bildsensor (1) so auf dem Antriebsträger (2) befestigt ist, dass der Sensor während einer Drehung des Antriebsträgers (2) verschiedene einzelne Zonen, die das Thermographiesystem umgeben, abbildet, wobei der Bildsensor (1) zur Erfassung mehrerer einzelner Bilder angeordnet ist, sodass die Kombination dieser verschiedenen Bilder ein kontinuierliches Panorama von mindestens 180 Grad um die Drehachse des Antriebsträgers (2) bildet,
- ein Verarbeitungsmodul (6), das so angeordnet und/oder programmiert ist, dass es eine Temperatur des Objekts (11) anhand der vom Bildsensor (1) erfassten Bilder misst,
**dadurch gekennzeichnet, dass** es eine Nahfeld-Infrarot-Referenzquelle (7), eine so genannte Ungleichmäßigkeitskorrekturquelle, und ein optisches System, das die Nahfeld-Infrarot-Referenzquelle (7) optisch mit dem Bildsensor (1) verbindet, umfasst,
wobei der Antriebsträger (2) so angeordnet ist, dass er den Sensor um eine Drehachse in Drehung versetzt, wobei der Bildsensor (1) an dem Antriebsträger (2) befestigt ist, sodass mindestens eines der einzelnen Bilder jedes Panoramas die Ungleichmäßigkeitskorrekturquelle abbildet, wobei das Verarbeitungsmodul (6) so angeordnet und/oder programmiert ist, dass es eine räumliche Ungleichmäßigkeit der erfassten Bilder in Abhängigkeit von der Ungleichmäßigkeitskorrekturquelle korrigiert,
und **dadurch gekennzeichnet, dass** die Ungleichmäßigkeitskorrekturquelle in einem solchen Abstand vom Bildsensor (1) angeordnet ist, dass mindestens ein erfasstes Bild, das so genannte Referenzbild, nur die Ungleichmäßigkeitskorrekturquelle abbildet,
und dadurch, dass die Nahfeld-Infrarot-Referenzquelle (7) sich nahe genug am Bildsensor (1) befindet, um außerhalb der Tiefenschärfe des optischen Systems zu liegen, das die Quelle (7) optisch mit dem Sensor (1) verbindet, sodass der Sensor (1) in der Brennebene des optischen Systems für mindestens eine Position des Antriebsträgers (2) so angeordnet ist, dass er nur aus der Quelle (7) stammende Lichtstrahlen auffängt.

2. Infrarot-Thermographiesystem nach Anspruch 1, **dadurch gekennzeichnet, dass** sich das optische System zwischen der Nahfeldreferenzquelle (7) und dem Bildsensor (1) befindet.

3. Infrarot-Thermographiesystem nach einem der Ansprüche 1 bis 2, **dadurch gekennzeichnet, dass** das Verarbeitungsmodul (6) so angeordnet und/oder programmiert ist, dass es die räumliche Ungleichmäßigkeit korrigiert, indem es auf jedem der erfassten Bilder die räumliche Ungleichmäßigkeit Pixel für Pixel von dem Referenzbild, das die Ungleichmäßigkeitskorrekturquelle abbildet, entfernt.

4. Infrarot-Thermographiesystem nach einem der vorstehenden Ansprüche, **dadurch gekennzeichnet, dass** es eine Infrarot-Referenzquelle, eine so genannte Kalibrierungsquelle (8), umfasst, die thermostatisch geregelt oder mit Mitteln zur Messung ihrer Temperatur ausgestattet ist, wobei mindestens eines der einzelnen Bilder jedes Panoramas diese Kalibrierungsquelle abbildet, wobei das Verarbeitungsmodul (6) so angeordnet und/oder programmiert ist, dass es die Temperatur der von demselben Panorama erfassten Bilder in Abhängigkeit von dieser Kalibrierungsquelle kalibriert.

5. Infrarot-Thermographiesystem nach Anspruch 4, **dadurch gekennzeichnet, dass** die Kalibrierungsquelle thermostatisch auf eine Temperatur über 33 Grad und/oder unter 40 Grad geregelt wird.

6. Infrarot-Thermographiesystem nach einem der vorstehenden Ansprüche, **dadurch gekennzeichnet, dass** das Verarbeitungsmodul (6) so angeordnet und/oder programmiert ist, dass es:

- einen Abstand zwischen dem Objekt (11) und dem Bildsensor (1) in Abhängigkeit von einer Abmessung des Objekts (11) auf einem der erfassten Bilder bestimmt und/oder eine Position des Objekts (11) in einem Feld eines vom Bildsensor (1) erfassten Bildes bestimmt,
- die Temperatur des Objekts (11) in Abhängigkeit von dem zwischen dem Objekt (11) und dem Bildsensor bestimmten Abstand und/oder in Abhängigkeit von der Position des Objekts (11) im Feld eines vom Bildsensor (1) erfassten Bildes bestimmt.

7. Infrarot-Thermographiesystem nach einem der vorstehenden Ansprüche, **dadurch gekennzeichnet, dass** es mindestens einen Bildsensor (1) für sichtbares Licht umfasst, der so angeordnet ist, dass er das Objekt (11) gleichzeitig mit dem Infrarot-Bildsensor (1) aufnimmt.

8. Infrarot-Thermographiesystem nach einem der vorstehenden Ansprüche, **dadurch gekennzeichnet, dass** das Verarbeitungsmodul (6) so angeordnet und/oder programmiert ist, dass es eine Oberflächentemperatur des Objekts (11) misst, wobei das System ferner Mittel zum Messen der Umgebungstemperatur um das Objekt (11) herum umfasst, wobei das Verarbeitungsmodul (6) so angeordnet und/oder programmiert ist, dass es eine Innentemperatur des Objekts (11) in Abhängigkeit von der Oberflächentemperatur des Objekts (11) und der gemessenen Umgebungstemperatur misst.

9. Infrarot-Thermographiesystem nach einem der vorstehenden Ansprüche, **dadurch gekennzeichnet, dass** das Verarbeitungsmodul (6) dazu angeordnet und/oder programmiert ist, verschiedene Temperaturwerte des Objekts (11) über die Zeit zu bestimmen und den Maximalwert aus allen zuvor bestimmten Werten zu bestimmen.

10. Infrarot-Thermographiesystem nach einem der vorstehenden Ansprüche, **dadurch gekennzeichnet, dass** es Mittel zum Generieren eines optischen oder akustischen Alarms umfasst, wenn die Temperatur des Objekts (11):

- größer als eine vom Verarbeitungsmodul (6) gespeicherte Schwellentemperatur ist, oder
- eine Temperaturdifferenz aufweist, die größer als eine Schwellenwertdifferenz zu Temperaturen anderer vom Thermographiesystem abgebildeter Objekte (11) ist.

11. Infrarot-Thermographiesystem nach Anspruch 10, **dadurch gekennzeichnet, dass** die Mittel zum Generieren eines optischen oder akustischen Alarms so angeordnet und/oder programmiert sind, dass sie durch Vergleichen verschiedener gemessener Temperaturen des Objekts (11) einen Fehlalarm herausfiltern.

12. Infrarot-Thermographiesystem nach einem der vorstehenden Ansprüche, **dadurch gekennzeichnet, dass** das Verarbeitungsmodul (6) so angeordnet und/oder programmiert ist, dass es aus den vom Bildsensor (1) erfassten Bildern Folgendes eliminiert:

- Hotspots auf dem Objekt (11), und/oder
- einen das Objekt (11) umgebenden Hintergrund, bevor eine Temperatur des Objekts (11) gemessen wird.

13. Infrarot-Thermographieverfahren zur Messung der Temperatur eines Objekts (11), umfassend

- eine Sammlung von Infrarotstrahlungen durch einen mit einem optischen System ausgestatteten Infrarot-Wärmebildsensor (1) und eine Konstruktion mindestens eines Bildes aus diesen Strahlungen,
- einen Drehantrieb des Sensors um eine Drehachse durch einen Antriebsträger (2), wobei der Bildsensor (1) so auf dem Antriebsträger (2) befestigt ist, dass der Sensor bei der Drehung des Antriebsträgers (2) verschiedene einzelne Zonen um ein Thermographiesystem, das den Sensor und den Antriebsträger umfasst, abbildet, wobei der Bildsensor (1) eine Erfassung mehrerer einzelner Bilder vornimmt, sodass die Kombination dieser verschiedenen Bilder ein kontinuierliches Panorama von mindestens 180 Grad um die Drehachse des Antriebsträgers (2) bildet,

- eine Messung der Temperatur des Objekts (11) durch ein Verarbeitungsmodul (6) ausgehend von den vom Bildsensor (1) erfassten Bildern, wobei mindestens eines der einzelnen Bilder jedes Panoramas eine Nahfeld-Infrarot-Referenzquelle (7), eine so genannte Ungleichmäßigkeitskorrekturquelle, abbildet, wobei das Verarbeitungsmodul (6) eine räumliche Ungleichmäßigkeit der erfassten Bilder in Abhängigkeit von der Ungleichmäßigkeitskorrekturquelle korrigiert, wobei die Ungleichmäßigkeitskorrekturquelle in einem solchen Abstand vom Bildsensor (1) angeordnet ist, dass mindestens ein erfasstes Bild, das so genannte Referenzbild, nur die Ungleichmäßigkeitskorrekturquelle abbildet,

wobei die Nahfeld-Infrarot-Referenzquelle (7) sich nahe genug am Bildsensor (1) befindet, um außerhalb der Tiefenschärfe des optischen Systems zu liegen, das die Quelle (7) optisch mit dem Sensor (1) verbindet, sodass der Sensor (1) in der Brennebene des optischen Systems für mindestens eine Position des Antriebsträgers (2) nur Lichtstrahlen auffängt, die aus der Quelle (7) stammen.

14. Infrarot-Thermographieverfahren nach Anspruch 13, **dadurch gekennzeichnet, dass** das Verarbeitungsmodul (6) die räumliche Ungleichmäßigkeit korrigiert, indem es auf jedem der erfassten Bilder die räumliche Ungleichmäßigkeit Pixel für Pixel von dem Referenzbild, das die Ungleichmäßigkeitskorrekturquelle abbildet, entfernt.

15. Infrarot-Thermographieverfahren nach einem der Ansprüche 13 bis 14, **dadurch gekennzeichnet, dass** das Verarbeitungsmodul (6):

- einen Abstand zwischen dem Objekt (11) und dem Bildsensor (1) in Abhängigkeit von einer Abmessung des Objekts (11) auf einem der erfassten Bilder bestimmt und/oder eine Position des Objekts (11) in einem Feld eines vom Bildsensor (1) erfassten Bildes bestimmt,
- die Temperatur des Objekts (11) in Abhängigkeit von dem zwischen dem Objekt (11) und dem Bildsensor bestimmten Abstand und/oder in Abhängigkeit von der Position des Objekts (11) in einem Feld eines vom Bildsensor (1) erfassten Bildes korrigiert.

16. Infrarot-Thermographieverfahren nach einem der Ansprüche 13 bis 15, **dadurch gekennzeichnet, dass** das Verarbeitungsmodul (6) aus den vom Bildsensor (1) erfassten Bildern Folgendes eliminiert:

- Hotspots auf dem Objekt (11), und/oder
- einen das Objekt (11) umgebenden Hintergrund, bevor eine Temperatur des Objekts (11) gemessen wird.

## Claims

1. Infrared thermographic system configured to measure the temperature of an object (11) comprising:

- a thermal infrared image sensor (1) arranged to collect infrared radiation and construct at least one image based on this radiation,
- a drive support (2) arranged to drive the sensor in rotation about an axis of rotation, the image sensor (1) being fastened on the drive support (2) such that, during a rotation of the drive support (2), the sensor images different distinct areas surrounding the thermographic system,
the image sensor (1) being arranged to acquire several distinct images such that combining these different images forms a continuous panorama of at least 180 degrees about the axis of rotation of the drive support (2),
- a processing module (6) arranged and/or programmed to measure a temperature of said object (11) based on the images acquired by the image sensor (1),
**characterized in that** it comprises a near-field infrared reference source (7) called non-uniformity correction source and an optical system optically connecting the near-field infrared reference source (7) to the image sensor (1),
the drive support (2) being arranged to drive the sensor in rotation about an axis of rotation, the image sensor (1) being fastened on the drive support (2) such that at least one of the distinct images of each panorama images the non-uniformity correction source, the processing module (6) being arranged and/or programmed to correct a spatial non-uniformity of the acquired images as a function of the non-uniformity correction source,
and **characterized in that** the non-uniformity correction source is situated at a distance from the image sensor (1) such that at least one acquired image, called reference image, images only the non-uniformity correction source,
and **characterized in that** the near-field infrared reference source (7) is close enough to the image sensor (1) to be situated outside the depth of field of the optical system optically connecting the source (7) to the sensor (1), such that, for at least one position of the drive support (2), the sensor (1) is arranged to intercept only light radiation originating from the source (7) in the focal plane of the optical system optically connecting the source (7) to the sensor (1).

2. Infrared thermographic system according to claim 1, **characterized in that** the optical system is situated between the near-field reference source (7) and the image sensor (1).

3. Infrared thermographic system according to any one of claims 1 to 2, **characterized in that** the processing module (6) is arranged and/or programmed to correct the spatial non-uniformity by pixel to pixel subtraction, on each of the acquired images, of the spatial non-uniformity of the reference image imaging the non-uniformity correction source.

4. Infrared thermographic system according to the any one of the preceding claims, **characterized in that** it comprises an infrared reference source, called calibration source (8), thermostatically controlled or equipped with means for measuring its temperature, at least one of the distinct images of each panorama imaging this calibration source, the processing module (6) being arranged and/or programmed for temperature calibration of the acquired images of one and the same panorama as a function of this calibration source.

5. Infrared thermographic system according to claim 4, **characterized in that** the calibration source is thermostatically controlled to a temperature above 33 degrees and/or below 40 degrees.

6. Infrared thermographic system according to any one of the preceding claims, **characterized in that** the processing module (6) is arranged and/or programmed to:

   - determine a distance between the object (11) and the image sensor (1) as a function of a dimension of the object (11) on one of the acquired images and/or determine a position of the object (11) in a field of an image acquired by the image sensor (1),
   - correct the temperature of the object (11) as a function of the determined distance between the object (11) and the image sensor and/or as a function of the position of the object (11) in a field of an image acquired by the image sensor (1).

7. Infrared thermographic system according to any one of the preceding claims, **characterized in that** it comprises at least one visible light image sensor (1), arranged to capture the object (11) simultaneously with the infrared image sensor (1).

8. Infrared thermographic system according to any one of the preceding claims, **characterized in that** the processing module (6) is arranged and/or programmed to measure a surface temperature of said object (11), the system further comprising means for measuring ambient temperature around the object (11), the processing module (6) being arranged and/or programmed to measure an internal temperature of the object (11) as a function of the surface temperature of said object (11) and of the measured ambient temperature.

9. Infrared thermographic system according to any one of the preceding claims, **characterized in that** the processing module (6) is arranged and/or programmed to determine different temperature values of the object (11) over time and to determine the maximum value among all the previously determined values.

10. Infrared thermographic system according to any one of the preceding claims, **characterized in that** it comprises means for generating a visual or acoustic warning signal if the temperature of the object (11):

    - is above a threshold temperature stored by the processing module (6), or
    - has a temperature difference greater than a threshold difference with respect to temperatures of other objects (11) imaged by the thermographic system.

11. Infrared thermographic system according to claim 10, **characterized in that** the means for generating a visual or acoustic warning signal are arranged and/or programmed to filter out a false warning signal by comparing different measured temperatures of the object (11).

12. Infrared thermographic system according to any one of the preceding claims, **characterized in that** the processing module (6) is arranged and/or programmed to eliminate, on images acquired by the image sensor (1):

- hot spots on the object (11), and/or
- a background surrounding the object (11)

before measuring a temperature of said object (11).

13. Infrared thermographic method for measuring the temperature of an object (11) comprising:

- collecting infrared radiation by means of a thermal infrared image sensor (1) equipped with an optical system and constructing at least one image based on this radiation,
- driving the sensor in rotation about an axis of rotation by means of a drive support (2), the image sensor (1) being fastened on the drive support (2) such that, during the rotation of the drive support (2), the sensor images different distinct areas surrounding a thermographic system comprising said sensor and said drive support, the image sensor (1) acquiring several distinct images such that combining these different images forms a continuous panorama of at least 180 degrees about the axis of rotation of the drive support (2),
- measuring, by a processing module (6), the temperature of said object (11) based on images acquired by the image sensor (1), at least one of the distinct images of each panorama imaging a near-field infrared reference source (7) called non-uniformity correction source, the processing module (6) correcting a spatial non-uniformity of the acquired images as a function of the non-uniformity correction source, the non-uniformity correction source being situated at a distance from the image sensors (1) such that at least one acquired image, called reference image, images only the non-uniformity correction source.

14. Infrared thermographic method according to claim 13, **characterized in that** the processing module (6) corrects the spatial non-uniformity by pixel to pixel subtraction, on each of the acquired images, of the spatial non-uniformity of the reference image imaging the non-uniformity correction source.

15. Infrared thermographic method according to any one of claims 13 to 14, **characterized in that** the processing module (6):

- determines a distance between the object (11) and the image sensor (1) as a function of a dimension of the object (11) on one of the acquired images and/or determines a position of the object (11) in a field of an image acquired by the image sensor (1),
- corrects the temperature of the object (11) as a function of the determined distance between the object (11) and the image sensor and/or as a function of the position of the object (11) in a field of an image acquired by the image sensor (1).

16. Infrared thermographic method according to any one of claims 13 to 15, **characterized in that** the processing module (6) eliminates on images acquired by the image sensor (1):

- hot spots on the object (11), and/or
- a background surrounding the object (11)

before measuring a temperature of said object (11).

[Fig. 1]

[Fig. 2]

# EP 4 217 694 B1

## RÉFÉRENCES CITÉES DANS LA DESCRIPTION

**Documents brevets cités dans la description**

- US 2013188010 A1
- WO 2016146704 A1
- US 2013147966 A1
- WO 2004027459 A2

**Littérature non-brevet citée dans la description**

- **ZHANG**. Bridging the Gap Between Anchor-Based and Anchor-Free Detection via Adaptive Training Sample Selection. *CVPR*, 2020
- **DIEDERIK KINGMA** ; **JIMMY BA**. *Adam: A method for stochastic optimization*, 2014
- **HEI LAW** ; **JIA DENG**. Cornernet: Detecting objects as paired keypoints. *ECCV*, 2018